# EUROPÄISCHE PATENTANMELDUNG

(11) **EP 2 866 516 A1**
(43) Veröffentlichungstag der Anmeldung: **29.04.2015**
(21) Anmeldenummer: 14003603.9
(22) Anmeldetag: 22.10.2014
(51) Int. Cl.: H05B 1/02, B64D 15/12

(54) **Heizsteuergerät und Verbundregelkreis für ein Fluggerät sowie Verfahren zum Betreiben eines Heizsteuergeräts**

(30) Priorität: 23.10.2013 DE 102013017637
(71) Anmelder: ESW GmbH, 22880 Wedel (DE)
(72) Erfinder: Struck, Jürgen, 22547 Hamburg (DE)
(74) Vertreter: Waldauf, Alexander

(57) **Zusammenfassung**

Die Erfindung betrifft ein Heizsteuergerät (HCU) für ein Fluggerät, wobei das Heizsteuergerät (HCU) eine Datenbus-Schnittstelle (220), zumindest eine Sensorschnittstelle (222) sowie eine Schnittstelle (224) für zumindest ein Heizelement (104) zum Bereitstellen eines Heizsignals (110) umfasst, dadurch gekennzeichnet, dass das Heizsteuergerät (HCU) ausgebildet ist, das bereitgestellte Heizsignal (110) unter Verwendung eines über die Datenbus-Schnittstelle (220) und/oder die Sensorschnittstelle (222) empfangenen Sensorsignals (226) zu bestimmen und das Heizsignal (110) und/oder ein weiteres Heizsignal (110) an der Datenbus-Schnittstelle (220) auszugeben, wobei das weitere Heizsignal (110) unter Verwendung des Sensorsignals (226) bestimmt wird.

## Beschreibung

### Stand der Technik

Die vorliegende Erfindung bezieht sich auf ein Heizsteuergerät für ein Fluggerät, einen Verbundregelkreis für ein Fluggerät mit zumindest zwei entsprechenden Heizsteuergeräten, ein entsprechendes Verfahren zum Betreiben eines Heizsteuergeräts für ein Fluggerät sowie ein entsprechendes Computer-Programmprodukt.

Bei Flugzeugen können zum Enteisen oder Heizen Heizelemente verwendet werden, die von einem zugeordneten Steuergerät gesteuert werden. Dabei ist einem Heizelement zumindest ein Temperatursensor zugeordnet, der eine Information über eine Temperatur in der Umgebung des Heizelements bereitstellt. Die Temperaturmesswerte werden zur Steuerung oder Regelung der Heizelemente verwendet.

In der Offenlegungsschrift WO 2013 083436 A1 wird ein Heizsystem für ein Luft- oder Raumfahrzeug vorgestellt, mit einem Steuergerät, welches mindestens einen Stromleitungsdatenübertragungs-Transceiver und eine Sensorsteuerung aufweist, und mindestens einer Wegbaukomponente, welche ein Sensorelement und ein Heizelement aufweist, wobei der mindestens einen Stromleitungsdatenübertragungs-Transceiver mit der mindestens einen Wegbaukomponente über eine Verbindungsleitung verbunden ist, wobei das Steuergerät dazu ausgelegt ist, das mindestens eine Heizelement über die Verbindungsleitung mit Strom zu versorgen, und wobei die Sensorsteuerung dazu ausgelegt ist, erste Steuersignale mit dem Sensorelement über die Verbindungsleitung auszutauschen.

Es ist Aufgabe der vorliegenden Erfindung eine verbesserte Ansteuerung von zumindest einem Heizelement für ein Fluggerät zu schaffen.

### Offenbarung der Erfindung

Vor diesem Hintergrund wird mit der vorliegenden Erfindung ein Heizsteuergerät für ein Fluggerät, ein Verbundregelkreis für ein Fluggerät mit zumindest zwei entsprechenden Heizsteuergeräten, ein Verfahren zum Betreiben eines entsprechenden Heizsteuergeräts sowie ein entsprechendes Computer-Programmprodukt gemäß dem Hauptanspruch vorgestellt. Vorteilhafte Ausgestaltungen ergeben sich aus den Unteransprüchen und der nachfolgenden Beschreibung.

In einem Heizsteuergerät (engl. Heating Control Unit = Heizsteuergerät) können eine Mehrzahl von Kanälen, die ausgebildet sind, ein Heizsignal auszugeben, zu einer virtuellen Gruppe zusammengefasst werden und die Heizsignale für die virtuelle Gruppe unter Verwendung von einem Temperatursignal oder allgemein einem Sensorsignal bestimmt werden. Dabei kann die virtuelle Gruppe auch Kanäle eines weiteren, über einen Datenbus verbundenen Heizsteuergeräts umfassen. Vorteilhaft kann durch das Nutzen eines Sensors für eine Vielzahl von Heizsignalen Gewicht eingespart werden.

Es wird vorliegend ein Heizsteuergerät für ein Fluggerät vorgestellt, wobei das Heizsteuergerät eine Datenbus-Schnittstelle, zumindest eine Sensorschnittstelle sowie eine Schnittstelle für zumindest ein Heizelement zum Bereitstellen eines Heizsignals umfasst, wobei das Heizsteuergerät dadurch gekennzeichnet ist, dass
das Heizsteuergerät ausgebildet ist, das bereitgestellte Heizsignal unter Verwendung eines über die Datenbus-Schnittstelle und ergänzend oder alternativ die Sensorschnittstelle empfangenen Sensorsignals zu bestimmen und
das Heizsignal und ergänzend oder alternativ ein weiteres Heizsignal an der Datenbus-Schnittstelle auszugeben, wobei das weitere Heizsignal unter Verwendung des Sensorsignals bestimmt wird.

Unter einem Fluggerät kann ein Raumfahrzeug oder ein Luftfahrzeug wie beispielsweise ein Flugzeug oder ein Hubschrauber verstanden werden. Ein Fluggerät kann zumindest ein Heizelement aufweisen. Dabei können beispielsweise zur Vorflügelenteisung oder zur Enteisung von einem Rotorblatt Heizelemente eingesetzt werden. Auch in anderen Bereichen wie Türen oder Notausstiegen oder zur Klimatisierung der Kabine können Heizelemente Verwendung finden. Ein Heizelement kann mit einem Heizsteuergerät verbunden sein. Ein Heizsteuergerät kann auch mit dem englischsprachigen Begriff als "Heating Control Unit" oder HCU bezeichnet werden. Das Heizsteuergerät weist zumindest eine Datenbus-Schnittstelle, zumindest eine Sensorschnittstelle sowie eine Schnittstelle zum Bereitstellen eines Heizsignals auf. Die Sensorschnittstelle und die Schnittstelle zum Bereitstellen eines Heizsignals können in einer Kombischnittstelle zusammengefasst sein.

Die Datenbus-Schnittstelle kann als eine Feldbusschnittstelle ausgebildet sein. Die Datenbus-Schnittstelle kann ausgebildet sein, eine Verbindung mit einem Datenbus oder einem Feldbus herzustellen. So kann die Datenbus-Schnittstelle beispielsweise eine Verbindung zu einem CAN-Bus oder einem Avionik-Bus wie beispielsweise MIL-Bus oder ARINC bereitstellen. Die Datenbus-Schnittstelle kann dabei echtzeitfähig ausgebildet sein. Die Datenbus-Schnittstelle kann bidirektional ausgebildet sein, um beispielsweise Sensorsignale oder Steuer- oder Regelsignale zu empfangen und auszugeben. Unter einem Heizsignal kann eine Information zur Ansteuerung eines Heizelements verstanden werden. Unter einem Heizsignal kann ein analoges Signal zum Ansteuern eines Heizelements verstanden werden. In einer Ausführungsform umfasst ein Heizsignal eine Information über das anzusteuernde Heizelement. Das Heizsteuergerät kann ausgebildet sein, für jedes angeschlossene oder anschließbare Heizelement ein Heizsignal zu bestimmen oder bereitzustellen. Das Heizsteuergerät ist ausgebildet, ein oder mehrere, insbesondere verschiedene, Heizsignale an der Datenbus-Schnittstelle bereitzustellen. Dabei kann einem oder mehreren Heizsignalen ein Sensorsignal zugeordnet sein. Ein oder mehrere Sensorsignale können über die Datenbus-Schnittstelle und ergänzend oder alternativ über die Sensorschnittstelle empfangen werden. Dabei repräsentiert ein Sensorsignal eine Information über ein physikalisches Phänomen. So kann es sich bei dem Sensorsignal um eine Information oder ein Signal eines Temperatursensors oder eines Eiserkennungssensors handeln. Das Heizsteuergerät kann ausgebildet sein, ein Heizsignal, ein weiteres Heizsignal und gleichzeitig oder alternativ ein zusätzliches Heizsignal bereitzustellen. Das eine Heizsignal oder die Mehrzahl der Heizsignale können über die Datenbus-Schnittstelle und ergänzend oder alternativ über die Schnittstelle zum Bereitstellen von zumindest einem Heizsignal bereitgestellt werden. Das Heizsteuergerät kann eine Mehrzahl von Heizsignalen, insbesondere unterschiedlichen Heizsignalen, bereitstellen. Eine Mehrzahl von Heizsignalen kann unter Verwendung von einem Sensorsignal oder einer Mehrzahl von Sensorsignalen bestimmt oder bereitgestellt werden.

Unter einem Heizsteuergerät kann vorliegend ein elektrisches Gerät verstanden werden, das Sensorsignale verarbeitet und in Abhängigkeit davon Steuer- und/oder Datensignale ausgibt. Die Datenbus-Schnittstelle, die zumindest eine Sensorschnittstelle sowie die Schnittstelle für zumindest ein Heizelement zum Bereitstellen eines Heizsignals können hard- und/oder softwaremäßig ausgebildet sein. Die Schnittstellen können bei einer hardwaremäßigen Ausbildung beispielsweise Teil eines sogenannten System-ASICs sein, der verschiedenste Funktionen des Heizsteuergeräts beinhaltet. Alternativ ist jedoch auch möglich, dass die Schnittstellen eigene, integrierte Schaltkreise sind oder zumindest teilweise aus diskreten Bauelementen bestehen. Die Schnittstellen können bei einer softwaremäßigen Ausbildung Softwaremodule sein, die beispielsweise neben anderen Softwaremodulen auf einem Mikrocontroller vorhanden sind.

Ferner kann die Datenbus-Schnittstelle gleichzeitig als Systembus-Schnittstelle ausgebildet sein und ergänzend oder alternativ kann die Datenbus-Schnittstelle zur Kommunikation mit einem Echtzeit-Datenbus ausgebildet sein. Auch durch diese Ausführungsform können Aspekte der vorliegenden Erfindung effizient umgesetzt werden.

Günstig ist es auch, wenn über die Datenbus-Schnittstelle ein Heizsignal empfangbar ist, welches an der Schnittstelle für zumindest ein Heizelement ausgebbar ist. So kann von einem Heizsteuergerät ein Heizsignal für ein an einem anderen Heizsteuergerät angebundenes Heizelement bereitgestellt werden und über die Datenbus-Schnittstelle dem anderen Heizsteuergerät zur Verfügung gestellt werden. Das andere Heizsteuergerät kann das Heizsignal über die Datenbus-Schnittstelle empfangen und über die Schnittstelle zum Bereitstellen eines Heizsignals an das, an das andere Heizsteuergerät angebundene, Heizelement leiten. Dabei kann das Heizsignal über die Datenbus-Schnittstelle als ein digitales Signal übertragen werden, und das andere Heizsteuergerät kann das als digitales Signal empfangene Heizsignal in ein analoges Heizsignal wandeln und an das Heizelement leiten.

Das Heizsteuergerät kann in einer Ausführungsform ein über die Sensorschnittstelle empfangenes Sensorsignal an der Datenbus-Schnittstelle bereitstellen. Damit kann ein anderes Heizsteuergerät das Sensorsignal des mit dem Heizsteuergerät über die Sensorschnittstelle verbundenen Sensors zum Bestimmen eines Heizsignals nutzen. Vorteilhaft kann ein Sensorsignal zum Bestimmen einer Mehrzahl von Heizsignalen genutzt werden. Dadurch kann zumindest ein Sensor eingespart werden. Durch das Einsparen eines Sensors kann Gewicht eingespart werden. In einer Ausführungsform kann der Sensor eine Bus-Schnittstelle aufweisen und das Sensorsignal kann direkt auf den Datenbus eingespeist werden.

Ferner kann in einer Ausführungsform das Heizsteuergerät mit zumindest einem weiteren Heizsteuergerät in einen Verbundregelkreis, insbesondere über die Datenbus-Schnittstelle, zusammenschaltbar sein. So können zumindest zwei Heizsteuergeräte einen Verbundregelkreis bilden. Ein Heizsignal kann dabei von dem Heizsteuergerät und ein weiteres Heizsignal kann von dem weiteren Heizsteuergerät unter Verwendung eines Sensorsignals bestimmt und bereitgestellt werden.

Ferner kann das Heizsteuergerät einen Datenspeicher aufweisen oder mit diesem verbunden sein. Dabei kann der Datenspeicher ausgebildet sein, Sollwertvorgaben und ergänzend oder alternativ Regelparameter dem Heizsteuergerät bereitzustellen. Ein Datenspeicher kann als eine "Parameter Data Unit" oder kurz PDU bezeichnet werden. Durch den Datenspeicher kann ein Heizsteuergerät einfach konfigurierbar sein. So kann durch einen Austausch des Datenspeichers ein Heizsteuergerät für einen alternativen Einbauort oder ein weiteres Fluggerät konfiguriert werden.

Günstig ist es auch, wenn in einer Ausführungsform das Heizsteuergerät über die Datenbus-Schnittstelle mit einem Temperatursollwertgeber verbindbar ist. Ein Temperatursollwertgeber kann auch als ein "Temperature Setting Panel" oder kurz TSP bezeichnet werden. Ein Temperatursollwertgeber kann zu einer Sollwerteingabe für ein Heizelement oder für eine Stellgröße dienen, die in einer Abhängigkeit zu dem Heizsignal oder einer Mehrzahl von Heizsignalen steht. Über einen Temperatursollwertgeber kann ein Bediener einer Stellgröße einstellen.

In einer Ausführungsform ist das Heizelement ausgebildet, unter Verwendung einer elektrischen Spannung zwischen 100 V und 250 V betrieben zu werden. Dabei kann ein Teilbereich eines Flügels und ergänzend oder alternativ ein Teilbereich eines Rotors eines Fluggeräts enteist werden. Alternativ kann eine andere Komponente eines Fluggeräts beheizt oder geheizt werden. Dabei kann das Heizsignal in einer analogen Ausprägung eine Spannung in einem Bereich zwischen 110 V und 250 V aufweisen. Dabei kann die Stromstärke des Heizsignals variiert werden. So kann das Heizsteuergerät ausgebildet sein, an der Schnittstelle für zumindest ein Heizelement zum Bereitstellen eines Heizsignals ein analoges Heizsignal auszugeben, wobei das analoge Heizsignal eine Spannung in einem Bereich zwischen 110 V und 250 V aufweist.

Die Sensorschnittstelle kann ausgebildet sein, Sensordaten von zumindest einem Widerstandstemperatursensor und ergänzend oder alternativ einem Eiserkennungssensor zu empfangen. Über einen Widerstandstemperatursensor kann eine Temperatur und indirekt eine Vereisung oder eine potenzielle Vereisung bestimmt werden.

Es wird ein Verbundregelkreis für ein Fluggerät vorgestellt, wobei der Verbundregelkreis zumindest zwei Heizsteuergeräte, entsprechend einer Variante eines hier vorgestellten Heizsteuergeräts, umfasst, wobei die zumindest zwei Heizsteuergeräte über einen Datenbus miteinander verbunden sind.

In einer Ausführungsform des Verbundregelkreises kann ein zentrales Steuergerät (CCU) über den Datenbus mit den zumindest zwei Heizsteuergeräten (HCU) verbunden sein. In einer Ausführungsform des Verbundregelkreises kann zumindest eine Sollwerteingabeeinrichtung (TSP) über den Datenbus mit den zumindest zwei Heizsteuergeräten (HCU) verbunden sein. Das zentrale Steuergerät kann englisch als "Central Control Unit" oder kurz CCU bezeichnet werden. Die Sollwerteingabeeinrichtung kann als "Temperatur Setting Panel" oder TSP bezeichnet werden. Ein zentrales Steuergerät kann Sollwerte für eine Mehrzahl von Heizsteuergeräten oder für eine Mehrzahl von Heizkanälen einer Mehrzahl von Heizsteuergeräten vorgeben oder steuern beziehungsweise regeln. Der Verbundregelkreis kann erweitert werden mit einer Vielzahl von Heizsteuergeräten, wobei virtuelle Kanalgruppen über Heizkanäle der Mehrzahl von Heizsteuergeräten bildbar sind.

Es wird ein Verfahren zum Betreiben einer Variante eines hier vorgestellten Heizsteuergeräts für ein Fluggerät vorgestellt, wobei das Verfahren die folgenden Schritte umfasst:
Einlesen eines Sensorsignals, wobei das Sensorsignal eine Sensorinformation eines Temperatursensors und ergänzend oder alternativ eines Eiserkennungssensors repräsentiert, wobei das Sensorsignal über eine Sensorschnittstelle und ergänzend oder alternativ über eine Datenbus-Schnittstelle eines der zwei Heizsteuergeräte eingelesen wird;
Bestimmen eines Heizsignals unter Verwendung des Sensorsignals, wobei das Heizsignal eine Information über einen Strom und ergänzend oder alternativ über eine Spannung zum Ansteuern zumindest eines Heizelements repräsentiert; und
Bereitstellen des Heizsignals an der Schnittstelle für zumindest ein Heizelement zum Bereitstellen eines Heizsignals und ergänzend oder alternativ der Datenbus-Schnittstelle, um zumindest ein Heizelement zu betreiben.

Das Heizsteuergerät kann in einem Verbundregelkreis mit zumindest einem weiteren Heizsteuergerät verbunden sein. Dabei können die Verfahrensschritte auf einer Mehrzahl von Heizsteuergeräten ausgeführt werden. In einer Ausführungsform wird eine Variante des hier vorgestellten Verfahrens auf einem zentralen Steuergerät ausgeführt.

Im Schritt des Bereitstellens kann das Sensorsignal an der Datenbus-Schnittstelle bereitgestellt wird.

Im Schritt des Einlesens kann zumindest ein Regelparameter eingelesen werden. Im Schritt des Bestimmens kann das Heizsignal unter Verwendung des Regelparameters bereitgestellt werden.

In einer Ausführungsform ist das Heizsteuergerät ausgebildet, die Schritte einer Variante des hier vorgestellten Verfahrens in entsprechenden Einrichtungen durchzuführen bzw. umzusetzen. Auch durch diese Ausführungsvariante der Erfindung in Form eines Heizsteuergeräts kann die der Erfindung zugrunde liegende Aufgabe schnell und effizient gelöst werden.

Von Vorteil ist auch ein Computerprogrammprodukt mit Programmcode, der auf einem maschinenlesbaren Träger wie einem Halbleiterspeicher, einem Festplattenspeicher oder einem optischen Speicher gespeichert sein kann und zur Durchführung des Verfahrens nach einer Variante einer der vorstehend beschriebenen Ausführungsformen verwendet wird, wenn das Computerprogrammprodukt auf einem Computer, einer Vorrichtung oder einem Heizsteuergerät ausgeführt wird.

Die Erfindung wird nachstehend anhand der beigefügten Zeichnungen beispielhaft näher erläutert. Es zeigen:
- Fig. 1: eine schematische Darstellung eines Fluggeräts mit einer Mehrzahl von Heizsteuergeräten in einem Verbundregelkreis gemäß einem Ausführungsbeispiel der vorliegenden Erfindung;
- Fig. 2: ein Blockschaltbild eines Heizsteuergeräts für ein Fluggerät gemäß einem Ausführungsbeispiel der vorliegenden Erfindung;
- Fig. 3: ein Blockschaltbild eines Verbundregelkreises für ein Fluggerät mit einem zentralen Steuergerät und Temperatursollwertgeber gemäß einem Ausführungsbeispiel der vorliegenden Erfindung;
- Fig. 4: ein Blockschaltbild eines Verbundregelkreises mit drei Heizsteuergeräten für ein Fluggerät gemäß einem Ausführungsbeispiel der vorliegenden Erfindung;
- Fig. 5: ein Blockschaltbild eines Verbundregelkreises ohne ein zentrales Steuergerät gemäß einem Ausführungsbeispiel der vorliegenden Erfindung;
- Fig. 6: ein Blockschaltbild eines Verbundregelkreises mit einem zentralen Steuergerät gemäß einem Ausführungsbeispiel der vorliegenden Erfindung; und
- Fig. 7: einen Ablaufplan eines Verfahrens zum Betreiben eines Heizsteuergeräts für ein Fluggerät gemäß einem Ausführungsbeispiel der vorliegenden Erfindung.

In der nachfolgenden Beschreibung günstiger Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

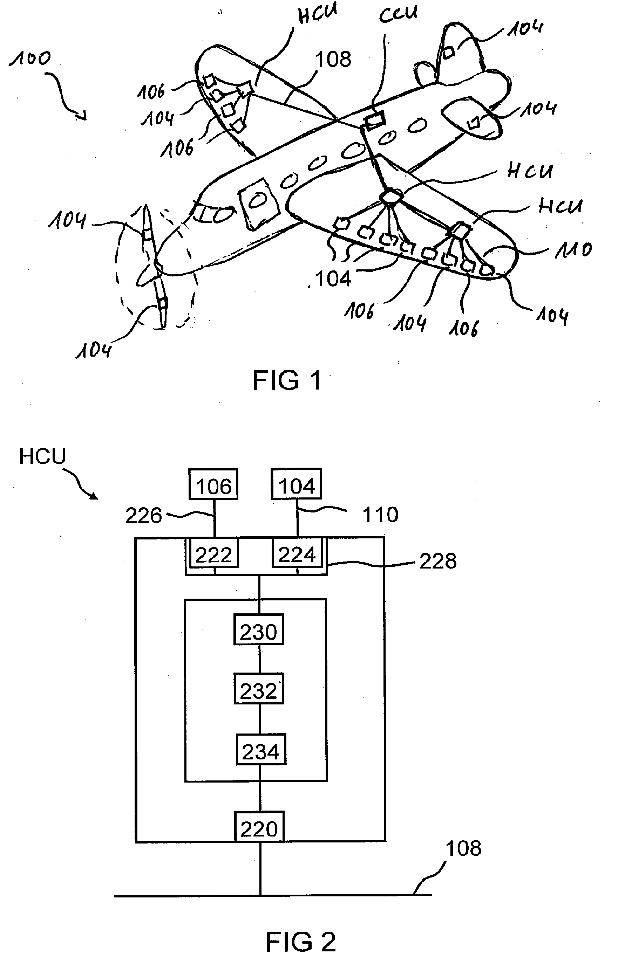

Fig. 1 zeigt eine schematische Darstellung eines Fluggeräts 100 mit drei Heizsteuergeräten HCU in einem Verbundregelkreis 102 gemäß einem Ausführungsbeispiel der vorliegenden Erfindung. Die Heizsteuergeräte HCU sind mit Heizelementen 104 und Sensoren 106 verbunden. Die Heizsteuergeräte HCU sind über einen Datenbus 108 miteinander verbunden. So weist das Heizsteuergerät HCU eine Datenbus-Schnittstelle, eine Sensorschnittstelle sowie eine Schnittstelle für zumindest ein Heizelement zum Bereitstellen eines Heizsignals 110 auf. Das Heizsteuergerät HCU ist ausgebildet, unter Verwendung eines Sensorsignals zumindest ein Heizsignal zu bestimmen und bereitzustellen. Die über eine entsprechende Schnittstelle mit dem Heizsteuergerät HCU verbundenen Heizelemente 104 sind ausgebildet, ansprechend auf das Heizsignal 110 erwärmt zu werden. Das Heizsteuergerät HCU wird in der folgenden Fig. 2 näher beschrieben.

In dem in Fig. 1 gezeigten Ausführungsbeispiel sind Heizelemente 104 an einem Flügel des Fluggeräts angeordnet. Weitere Heizelemente 104 sind beispielsweise an einem Höhenruder, an einem Seitenruder und an einem Rotor des Fluggeräts 100 angeordnet. Je nach Ausführungsbeispiel handelt es sich bei dem Fluggerät 100 beispielsweise um ein Flugzeug oder einen Hubschrauber.

Unter einem Heizsteuergerät HCU, welches auch als Heizer-Controller bezeichnet wird, kann eine Reihe unterschiedlicher Steuergeräte HCU verstanden werden. Diese Heizsteuergeräte HCU steuern und überwachen beheizte Komponenten wie Fittinge, Drainmast, Bodenplatten, Luftheizer oder Türbeschläge in dem Fluggerät 100. Dabei sind je nach Ausführungsbeispiel Heizsteuergeräte HCU mit 2 bis 32 Kanälen vorgesehen. Ausführungsbeispiele umfassen Controller HCU mit 32 Heizerkanälen, eine Controllerfamilie HCU mit zwölf, acht oder vier Heizerkanälen und einen Controller HCU für die Cockpitscheiben-Enteisung mit zwei Kanälen.

Allen Heizsteuergeräten HCU ist in einem Ausführungsbeispiel gemeinsam, dass sie eine serielle Datenbus-Schnittstelle besitzen. Weitere Merkmale umfassen eine Einrichtung zum Software-Download, eine Lichtbogenerkennung, eine Stromüberwachung und Überstromabschaltung sowie Luftkühlung der Controller.

In Verbindung mit den dazugehörigen Dateneinheiten PDU können Parameter voreingestellt und gespeichert werden. Sie unterstützen die einfache Wartung und den Austausch der entsprechenden Heizsteuergeräte HCU.

Über Bedieneinheiten TSP können Temperaturen von bis zu zwei beheizbaren Komponenten, wie beispielsweise Fußbodenplatten oder Luftheizer eingestellt werden. Die Temperaturvorgaben werden über einen Datenbus 108 wie beispielsweise CAN-Bus an ein Heizsteuergerät HCU gesendet, und dort als Sollvorgabe für die elektrische Beheizung verwendet.

Aufgrund des Sensör-Sharings kann beispielsweise der Temperatursensor der rechten Remote-Komponente für die linke Remote-Komponente genutzt werden.

Ein Aspekt des vorliegenden Ausführungsbeispiels ist es, Heizsteuergeräte HCU derart zu ertüchtigen, dass sie in einem Verbund arbeiten können, ohne dass eine übergeordnete zentrale Steuerung CCU erforderlich ist. Die Enteisungscontroller HCU sind lediglich über einen gemeinsamen Datenbus 108, der auch der Systembus sein kann, miteinander verbunden. Die hierzu notwendige Programmierung des einzelnen Controllers HCU erfolgt in einem Ausführungsbeispiel durch einen externen Datenspeicher PDU.

In einem Ausführungsbeispiel beschränkt sich der Einsatz der Heizsteuergeräte HCU auf eine elektrische Enteisung mit 115V/106V AC Versorgungsspannung.

In einem Ausführungsbeispiel weist das Heizsteuergerät HCU eine sequenzielle Zeitsteuerung auf. Bei der sequenziellen Zeitsteuerung werden die einzelnen Kanäle beziehungsweise Heizelemente 104 im Rahmen einer sequenziellen Ablaufsteuerung getaktet, das heißt nach einem Ablaufplan in vorbestimmten Zeitintervallen ein bzw. ausgeschaltet. Dabei wird der zeitliche Ablauf der einzelnen Schaltzeitpunkte oder On/Off Zeitpunkte in einem Parameterspeicher abgelegt. Es können mehrere solcher Ablaufpläne, die zu einer unterschiedlichen Leistungsverteilung und -menge im zu enteisenden Strukturteil führen, abgelegt werden. Zur Laufzeit werden diese dann von extern beauftragt (über entsprechende Datenschnittstellen), können aber auch in Abhängigkeit von Sensorsignalen selbstständig vom Gerät angewählt werden. Diese Betriebsart ist speziell für die Enteisung von Rotorblättern geeignet, kann jedoch für beliebige Enteisungsaufgaben von Strukturteilen (Triebwerkseinläufe und Vorflügel) benutzt werden.

Fig. 2 zeigt ein Blockschaltbild eines Heizsteuergeräts HCU für ein Fluggerät gemäß einem Ausführungsbeispiel der vorliegenden Erfindung. Bei dem Fluggerät kann es sich um ein Ausführungsbeispiel eines in Fig. 1 beschriebenen und mit dem Bezugszeichen 100 versehenes Fluggerät handeln. Bei dem Heizsteuergerät HCU kann es sich um ein, in das in Fig. 1 dargestellte Fluggerät 100 integriertes, Heizsteuergerät HCU handeln. Das Heizsteuergerät HCU weist eine Datenbus-Schnittstelle 220, eine Sensorschnittstelle 222 sowie eine Schnittstelle 224 für zumindest ein Heizelement 104 zum Bereitstellen eines Heizsignals 110 auf. Die Datenbus-Schnittstelle 220 ist ausgebildet, mit einem Datenbus 108 verbunden zu werden. Je nach Ausführungsbeispiel kann es sich bei dem Datenbus 108 beispielsweise um einen Feldbus wie CAN-Bus, MIL-Bus, ARINC oder allgemein einen Avionik-Bus handeln. Das Heizsteuergerät HCU ist ausgebildet, ein Sensorsignal 226 von einem an der Sensorschnittstelle 222 angeschlossenen Sensor 106 und gleichzeitig oder alternativ über die Datenbus-Schnittstelle 220 von dem Datenbus 108 zu empfangen.

In einem Ausführungsbeispiel weist das Heizsteuergerät HCU eine Mehrzahl von Schnittstellen 224 zum Bereitstellen je eines Heizsignals 110 auf. So weist in einem günstigen Ausführungsbeispiel das Heizsteuergerät HCU beispielsweise 8, 16 oder 32 Schnittstellen 224 zum Bereitstellen je eines Heizsignals 110 auf. Gleiches gilt für die Sensorschnittstelle 222. In einem Ausführungsbeispiel ist immer eine Sensorschnittstelle 222 und eine Schnittstelle 224 zum Bereitstellen eines Heizsignals 110 zu einem Kanal 228 zusammengefasst. So weist ein Heizsteuergerät HCU in einem Ausführungsbeispiel acht, 16 oder 32 Kanäle 228 auf.

Das Heizsteuergerät HCU ist ausgebildet, unter Verwendung zumindest eines Sensorsignals 226 zumindest ein Heizsignal 110 zu bestimmen und bereitzustellen. Dabei kann das Heizsignal 110 an der Schnittstelle 224 für zumindest ein Heizelement 104 und ergänzend oder alternativ an der Datenbus-Schnittstelle 220 bereitgestellt werden.

In einem Ausführungsbeispiel ist die Datenbus-Schnittstelle 220 gleichzeitig als Systembus-Schnittstelle ausgebildet. Weiterhin ist die Datenbus-Schnittstelle 220 in einem Ausführungsbeispiel zur Kommunikation mit einem Echtzeit-Datenbus ausgebildet.

Über die Datenbus-Schnittstelle 220 ist ein Heizsignal 110 empfangbar. Das Heizsteuergerät HCU ist ausgebildet, ein über die Datenbus-Schnittstelle 220 empfangenes Heizsignal 110 an die Schnittstelle 224 für zumindest ein Heizelement 104 zu leiten und über die Schnittstelle 224 auszugeben. Dabei kann ein als digitales Signal empfangenes Heizsignal 110 von der Schnittstelle 224 oder einer anderen Einrichtung des Heizsteuergeräts HCU in ein analoges Signal gewandelt werden. Das analoge Heizsignal 110 weist in der Regel eine Spannung im Bereich zwischen 115 V und 250 V auf.

In einem Ausführungsbeispiel wird ein über die Sensorschnittstelle 222 empfangenes Sensorsignal 226 an der Datenbus-Schnittstelle 220 bereitgestellt. Je nach Ausführungsbeispiel handelt es sich bei dem über die Sensorschnittstelle 222 empfangenen Sensorsignal 226 um ein analoges Sensorsignal 226 oder um ein digitales Sensorsignal 226. An der Datenbus-Schnittstelle 220 wird ein digitales bzw. digitalisiertes Sensorsignal 226 ausgegeben.

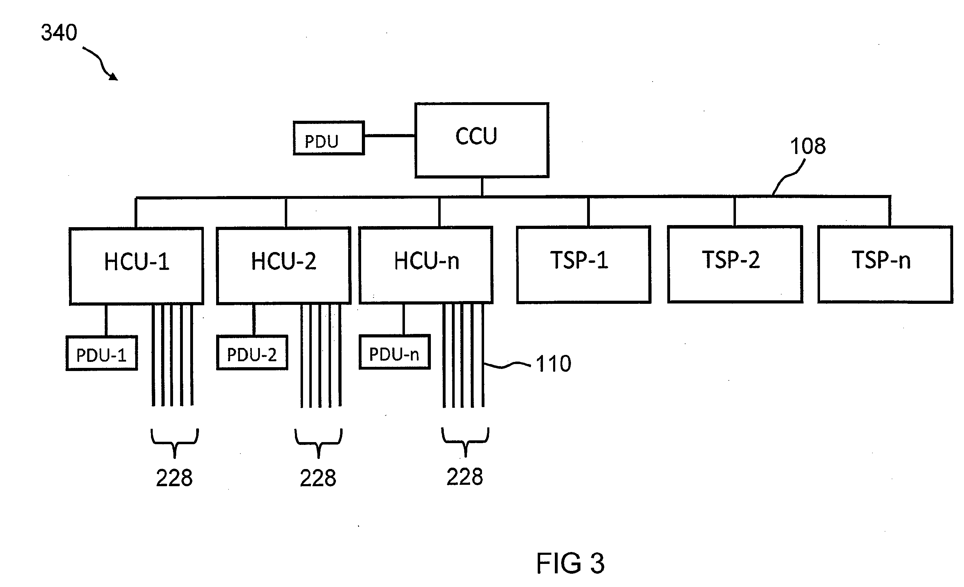

Das Heizsteuergerät HCU ist in einem Ausführungsbeispiel mit zumindest einem weiteren Heizsteuergerät HCU in einen Verbundregelkreis, insbesondere über die Datenbus-Schnittstelle 220 und über einen Datenbus 108, zusammenschaltbar. Entsprechende Ausführungsbeispiele sind in den folgenden Figuren Fig. 3 bis Fig. 5 beschrieben.

In einem in Fig. 2 nicht gezeigten Ausführungsbeispiel umfasst das Heizsteuergerät HCU einen Datenspeicher PDU, der ausgebildet ist, Sollwertvorgaben und ergänzend oder alternativ Regelparameter dem Heizsteuergerät HCU bereitzustellen. Ein Datenspeicher PDU wird auch als "Paramter Data Unit" (PDU) oder Parameter-Dateneinheit bezeichnet. Ein entsprechendes Ausführungsbeispiel wird in den folgenden Figuren beschrieben.

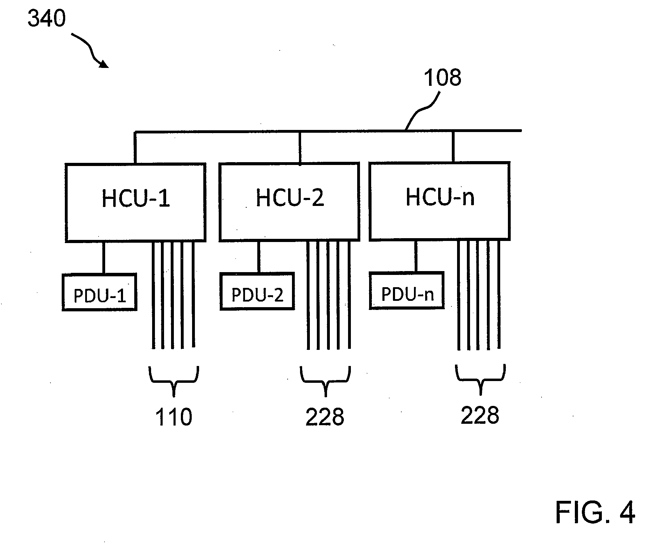

Das Heizsteuergerät HCU ist in einem in Fig. 2 nicht gezeigten Ausführungsbeispiel über die Datenbus-Schnittstelle 220 mit einem Temperatursollwertgeber TSP verbunden. Ein Temperatursollwertgeber TSP wird auch als "Temperature Setting Panel" bezeichnet. Ein entsprechendes Ausführungsbeispiel ist in Fig. 3 und Fig. 4 beschrieben.

Ein von dem Heizsteuergerät HCU bereitgestelltes analoges Heizsignal 110 weist eine elektrische Spannung in einem Bereich zwischen 115 V und 250 V auf. Das Heizsignal 110 ist geeignet, zumindest einen Teilbereich eines Flügels und/oder eines Rotors eines Fluggeräts zu enteisen.

Das Sensorsignal 226 repräsentiert ein mit einem Sensor 106 erfasstes physikalisches Phänomen. Das physikalische Phänomen kann beispielsweise eine Temperatur oder eine Vereisung darstellen. So ist in einem Ausführungsbeispiel die Sensorschnittstelle 222 ausgebildet, Sensordaten 226 von zumindest einem Widerstandstemperatursensor 106 und ergänzend oder alternativ von einem Eiserkennungssensor 106 zu empfangen. Mit anderen Worten handelt es sich in einem Ausführungsbeispiel bei dem Sensor 106 um einen Widerstandstemperatursensor 106 oder um einen Eiserkennungssensor 106.

In einem Ausführungsbeispiel umfasst die Heizsteuerung HCU eine Einrichtung 230 zum Einlesen eines Sensorsignals, eine Einrichtung 232 zum Bestimmen eines Heizsignals sowie eine Einrichtung 234 zum Bereitstellen des Heizsignals. Die Einrichtungen 230, 232, 234 sind beispielsweise in einem Mikrocontroller oder einem ASIC zusammengefasst. Das Sensorsignal 226 repräsentiert eine Sensorinformation eines Temperatursensors 106 und/oder eines Eiserkennungssensors 106, wobei das Sensorsignal 226 über die Sensorschnittstelle 222 und/oder über eine Datenbus-Schnittstelle 220 des Heizsteuergeräts HCU eingelesen wird. Die Einrichtung 232 zum Bestimmen des Heizsignals 110 bestimmt das Heizsignal 110 unter Verwendung des Sensorsignals 226, wobei das Heizsignal 110 eine Information über einen Strom und/oder über eine Spannung zum Ansteuern zumindest eines Heizelements 104 repräsentiert. Die Einrichtung 234 zum Bereitstellen des Heizsignals 110 ist ausgebildet, das Heizsignal 110 an der Schnittstelle 224 für zumindest ein Heizelement 104 zum Bereitstellen eines Heizsignals 110 und ergänzend oder alternativ an der Datenbus-Schnittstelle 220 bereitzustellen, um zumindest ein Heizelement 104 zu betreiben. Wenn das Heizsignal 110 an der Datenbus-Schnittstelle, insbesondere als ein digitales Heizsignal 110, bereitgestellt wird, ist das Heizsignal 110 über den Datenbus 108 und die Datenbus-Schnittstelle 220 eines weiteren Heizsteuergeräts HCU empfangbar beziehungsweise einlesbar, in ein analoges Heizsignal 110 von dem weiteren Heizsteuergerät HCU wandelbar und an ein an einer Schnittstelle 224 für zumindest ein Heizelement 104 des weiteren Heizsteuergeräts HCU ausgebbar.

Fig. 3 zeigt ein Blockschaltbild eines Verbundregelkreises 340 für ein Fluggerät mit einem zentralen Steuergerät CCU und Temperatursollwertgeber TSP gemäß einem Ausführungsbeispiel der vorliegenden Erfindung. Bei dem Fluggerät kann es sich um ein mit dem Bezugszeichen 100 und in Fig. 1 beschriebenes Fluggerät handeln. In dem Verbundregelkreis 340 sind drei Heizsteuergeräte HCU-1, HCU-2, HCU-n mit einem Datenbus 108 verbunden. Weiterhin sind ein zentrales Steuergerät CCU sowie drei Temperatursollwertgeber TSP-1, TSP-2 sowie TSP-n mit dem Datenbus 108 verbunden.

Das zentrale Steuergerät CCU ist mit einem Datenspeicher PDU verbunden. Das erste Heizsteuergerät HCU-1 ist mit dem ersten Datenspeicher PDU-1 verbunden. Das zweite Heizsteuergerät HCU-2 ist mit dem zweiten Datenspeicher PDU-2 verbunden. Das n-te Heizsteuergerät HCU-n ist mit dem n-ten Datenspeicher PDU-n verbunden. Die Heizsteuergeräte HCU-1, HCU-2, HCU-n weisen je eine Mehrzahl von Kanälen 228 auf, wobei ein Kanal eine Sensorschnittstelle und eine Schnittstelle für zumindest ein Heizelement kombiniert. Die Heizsteuergeräte HCU-1, HCU-2, HCU-n sind ausgebildet, zumindest ein Heizsignal 110 auszugeben.

In einem Ausführungsbeispiel ist der erste Temperatursollwertgeber TSP-1 dem ersten Heizsteuergerät HCU-1, der zweite Temperatursollwertgeber TSP-2 dem zweiten Heizsteuergerät HCU-2 sowie der n-te Temperatursollwertgeber TSP-n dem n-ten Heizsteuergerät HCU-n zugeordnet. Alternativ stellt ein Temperatursollwertgeber TSP einen Sollwert für eine Gruppe von Schnittstellen, Kanälen oder Heizsignalen bereit. Dabei können die Schnittstellen, Kanäle oder Heizsignale über eine Mehrzahl von Heizsteuergeräten verteilt sein.

In einem Ausführungsbeispiel des Verbundregelkreises 340 sind zumindest zwei Heizsteuergeräte HCU über einen Datenbus 108 miteinander verbunden.

In einem Ausführungsbeispiel des Verbundregelkreises 340 ist das zentrale Steuergerät CCU und gleichzeitig oder alternativ zumindest eine Sollwerteingabeeinrichtung TSP über den Datenbus 108 mit den zumindest zwei Heizsteuergeräten HCU verbunden.

Als ein Aspekt des vorgestellten Ausführungsbeispiels werden einzelne unabhängige Regelkreise zu Verbund-Regelkreisen für mehrkanalige Heizsteuergeräte HCU oder "Multi-Channel Heating Controller" (VHCU) innerhalb eines Heizsteuergeräts HCU sowie Heizsteuergerät HCU übergreifend mit Sensor-Sharing und flexibler Temperatursollwertvorgabe über die Temperatursollwertgeber (TSP) zusammengefasst.

In einem Anwendungsbeispiel ergibt sich wie in Fig. 1 beschrieben eine Verbundanwendung mehrerer Mehrkanal-Steuergeräte HCU für Heizelemente (Multi-Channel-Controller) für elektrische Vorflügelenteisung oder Rotorblatteinteisung, wobei die Anzahl der Kanäle eines Gerätes nicht ausreicht. Zusätzlich Verbundregelungen innerhalb eines Controllers durch Zusammenfassung mehrere Kanäle mit einer Sollwertvorgabe, beispielsweise für Luftheizer einer Bar in einem Fluggerät.

Mit anderen Worten schafft ein Ausführungsbeispiel eines Verbundregelkreises 340 eine Zusammenfassung von einzelnen unabhängigen Regelkreisen zu Verbund-Regelkreisen für Multi-Channel Heating Controller (VHCU) innerhalb der Geräte sowie geräteübergreifend mit Sensor-Sharing und flexibler Temperatursollwertvorgabe über die Temperatur Sollwertgeber (TSP)

Vorteilhaft werden Regelkreise zusammengefasst und können gemeinsam gesteuert und geregelt werden. Dabei kann ein Temperatursensor für eine Mehrzahl von Regelkreisen oder Heizsignalen 110 verwendet werden. Darüber hinaus kann ein Verbund einer Mehrzahl von Heizsteuergeräten und deren Regelkreise geschaffen werden. Hierüber sind Gewichtseinsparungen erzielbar.

Mit anderen Worten wird durch einen Aspekt der vorliegenden Erfindung ein Zusammenschalten einer beliebigen Anzahl von Heizkanälen/Regelkreisen mit geometrischer Verteilung im Flugzeug zu einem Verbund geschaffen. Weiterhin ist ein Zusammenschalten einer begrenzten Anzahl von Heizkanälen/Regelkreisen innerhalb eines Gerätes möglich. Es wird eine Gewichtseinsparung durch Nutzung mehrere Multi-Channel-Controller im Verbund durch Platzierung der Geräte mit kurzen Kabelwegen an den Heizern und Sensoren erzielt. Weiterhin ergibt sich eine Gewichtseinsparung durch Nutzung eines Temperatursensors für mehrere Regelkreise (Einsparung von Sensor(en) und Verkabelung). Dabei kann über den Parameterspeicher PDU eine Konfigurierbarkeit der Heizsteuergeräte HCU erzielt werden.

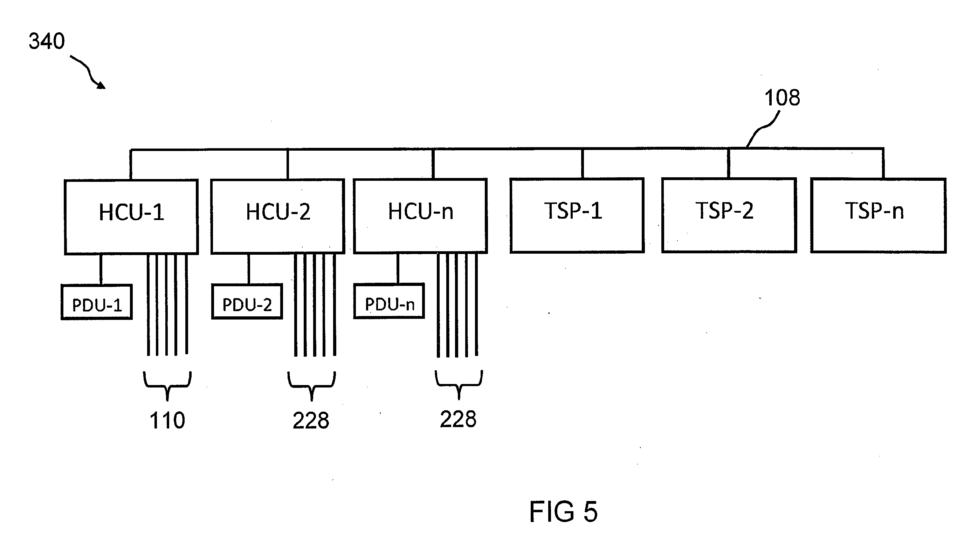

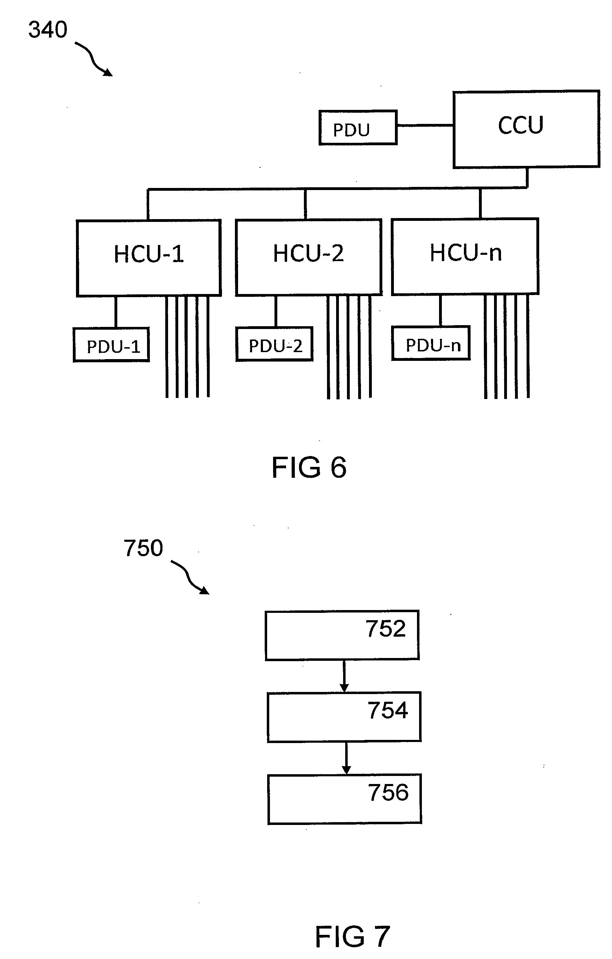

Fig. 4 bis Fig. 6 zeigen alternative Ausführungsbeispiele des Verbundregelkreises 340, wobei im Vergleich zu dem in Fig. 3 gezeigten Ausführungsbeispiel in Fig. 4 auf einen zentralen Controller CCU und auf ein Temperatursollwertgeber TSP verzichtet wird, in Fig. 5 eine Mehrzahl von Heizsteuergeräten HCU mit einer Mehrzahl von Temperatursollwertgebern TSP kombiniert ist und in Fig. 6 ein zentrales Steuergerät CCU mit einer Mehrzahl von Heizsteuergeräten HCU verbunden ist, wobei auf einen separaten Temperatursollwertgeber TSP verzichtet wird.

Ein Aspekt des vorliegenden Ausführungsbeispiels ist das Zusammenschalten von Regelkreisen in einem Heizsteuergerät HCU und geräteübergreifend durch Abstimmung und Datenaustausch der Heizsteuergeräte HCU beim Start (Power-On) und im Betrieb. Dabei können in unterschiedlichen Ausführungsbeispielen Heizsteuergeräte HCU wie Multi-Channel Controller (WIPCU, IPCU oder VHCU) mit einer skalierbaren Anzahl von Kanälen (bis zu 32) hier HCU benannt in einen Verbundregelkreis integriert werden. Kombinierbar ist dies mit Temperatursollwertgebern, die auch als "Floor Temperature Setting Panel" oder FTSP oder "Temperature Setting Panel" (TSP) benannt werden. Den Heizsteuergeräten HCU ist ein VHDU-Parameterspeicher oder Datenspeicher PDU für das jeweilige Heizsteuergerät HCU zuordenbar, der es ermöglicht in jedem Heizsteuergerät HCU die gleiche Software (und Partnummer) zu haben.

In dem in Fig. 3 gezeigten Ausführungsbeispiel nutzt der Verbundregelkreis 340 eine Geräte-Architektur mit einem zentralen Steuergerät CCU beziehungsweise einem zentralen Controller und eine Mehrzahl von Temperatursollwertgebern TSP. Die Geräte werden durch ein globales Bussystem (z. B. CAN-Bus) datentechnisch verbunden. Der zentrale Controller verteilt die Daten im System, sodass dadurch Verbundregelungen möglich sind. Die Sollwertgeber TSP sind ebenfalls an diesem Bus angeschlossen und haben die virtuelle Adresse TSP-1 bis TSP-n. Die Kanäle in den einzelnen Heizsteuergeräten HCU haben im System eine virtuelle Adresse Gerät-Nr./Kanal-Nr. Die Parameter der einzelnen Heizsteuergeräte HCU werden nach dem Start oder Einschalten (Power-On) in diese geladen. Im Parameterspeicher PDU oder im zentralen Controller CCU werden virtuelle Gruppen von Kanälen definiert. Beispielsweise umfasst Gruppe-1: Gerät-1/Kanal-3, Gerät-3/Kanal-5, Gerät-2/Kanal-7. In diesen Gruppen ist auch definiert, ob die einzelnen Kanäle ihren Sensor benutzen oder einen gemeinsamen Sensor, der definiert wird. Bei diesem Sensor-Sharing sorgt das Gerät, welches den Sensor angeschlossen hat, dafür, dass die Daten in der erforderlichen Abtastrate auf dem Datenbus für die anderen Geräte zur Verfügung stehen.

Einzelnen Kanälen oder den virtuellen Gruppen können die erforderlichen Sollwertgeber TSP zugeordnet werden, um die Vorgabe der Temperaturwerte für den Bediener zu ermöglichen. Alternativ werden Sollwerte durch das zentrale Steuergerät CCU vorgegeben. Werden einem Temperatursollwertgeber TSP mehrere Kanäle oder Gruppen zugeordnet, so können diese im Temperatursollwertgeber TSP separat angewählt werden. Falls der Temperatursollwertgeber TSP nur einen "up and down"-Taster haben, so kann das toggeln der Kanäle/Gruppen durch gleichzeitiges betätigen von "up and down" Geschehen.

Für die Architektur des Gerätenetzwerkes beziehungsweise Verbundregelkreises in einem Flugzeug werden in den Figuren Fig. 3 bis Fig. 6 verschiedene Varianten dargestellt und beschrieben.

Eine Geräte-Architektur mit zentralem Controller CCU und Temperatursollwertgebers TSP ist in Fig. 3 dargestellt. Dies zeigt einen allgemeinen Ansatz mit zentralem Controller CCU und maximalem Freiheitsgrad. Dabei sind mehrere Gruppen geräteübergreifend im Parameterspeicher definierbar und eine gemeinsame Nutzung von Sensoren ist möglich (Sensor-Sharing). Sollwerte für Heizsignale oder Temperaturen sind über Temperatursollwertgeber TSP und auch zentral über das zentrale Steuergerät CCU möglich.

Eine Geräte-Architektur ohne zentralen Controller ist in Fig. 4 und Fig. 5 dargestellt. Dies ist ein allgemeiner Ansatz mit maximalem Freiheitsgrad, wobei die Funktion des zentralen Controllers CCU von einem der Geräte (HCU) wahrgenommen wird. Mehrere Gruppen beziehungsweise Kanalgruppen sind geräteübergreifend im Parameterspeicher definierbar. Eine gemeinsame Nutzung von Sensoren ist möglich (Sensor-Sharing). Sollwerte für Heizsignale oder Temperaturen sind über Temperatursollwertgeber TSP und auch zentral möglich.

Eine Geräte-Architektur mit zentralem Controller CCU ohne Temperatursollwertgeber TSP ist in Fig. 6 dargestellt. Dies ist ein Ansatz für "ein" Verbundsystem, wie er beispielsweise für eine elektrische Vorflügelenteisung (viele Kanäle, mehrere HCU's) benötigt wird. Mehrere Gruppen sind geräteübergreifend im Parameterspeicher definierbar, eine gemeinsame Nutzung von Sensoren ist möglich (Sensor-Sharing). Sollwerte werden von der übergeordneten zentralen Einheit, das heißt dem zentralen Steuergerät CCU vorgegeben.

Die vorgestellten Ausführungsbeispiele zeigen eine Verbundregelung mit Multi-Channel Controllern für eine elektrische Vorflügelenteisung.

Fig. 4 zeigt ein Blockschaltbild eines Verbundregelkreises 340 mit drei Heizsteuergeräten HCU für ein Fluggerät gemäß einem Ausführungsbeispiel der vorliegenden Erfindung. Bei dem Fluggerät kann es sich um ein mit dem Bezugszeichen 100 und in Fig. 1 beschriebenes Fluggerät handeln. In dem Verbundregelkreis 340 sind drei Heizsteuergeräte HCU-1, HCU-2, HCU-n mit einem Datenbus 108 verbunden. Jedem Heizsteuergerät HCU bzw. HCU-1, HCU-2, HCU-n ist ein Datenspeicher PDU bzw. PDU-1, PDU-2, PDU-n zugeordnet. In einer derartigen Konfiguration oder Variante eines Verbundregelkreises 340 kann ein Heizsteuergerät HCU als Master ein oder mehrere Heizsteuergeräte HCU steuern oder entsprechende Sollwerte oder Heizsignale vorgeben. Dabei kann für unterschiedliche Kanalgruppen jeweils ein anderes Heizsteuergerät HCU als Master agieren.

Fig. 5 zeigt ein Blockschaltbild eines Verbundregelkreises 340 ohne ein zentrales Steuergerät gemäß einem Ausführungsbeispiel der vorliegenden Erfindung. Der in diesem Ausführungsbeispiel gezeigte Verbundregelkreis 340 verfügt im Vergleich zu dem in Fig. 3 beschriebenen Ausführungsbeispiel nicht über ein zentrales Steuergerät. Im Vergleich zu dem in Fig. 4 gezeigten Ausführungsbeispiel sind an den Datenbus 108 eine Mehrzahl Temperatursollwertgeber TSP bzw. TSP-1, TSP-2, TSP-n angeschlossen.

Das in Fig. 5 gezeigte Ausführungsbeispiel beschreibt eine Geräte-Architektur ohne zentralen Controller CCU. Die Geräte werden durch ein globales Bussystem 108 (z. B. CAN-Bus) datentechnisch verbunden. Das Heizsteuergerät HCU-1 ist automatisch auch der zentrale Controller und verteilt die Daten im System, sodass dadurch Verbundregelungen möglich sind. Die Sollwertgeber TSP sind ebenfalls an diesem Bus 108 angeschlossen und haben die virtuelle Adresse TSP-1 bis TSP-n. Die Kanäle in den einzelnen Heizsteuergeräten HCU haben im System eine virtuelle Adresse Gerät-Nr./Kanal-Nr.

Die Parameter der einzelnen Geräte werden nach Start (Power-On) in diese geladen. Im Parameterspeicher oder im zentralen Controller werden virtuelle Gruppen von Kanälen definiert, beispielsweise Gruppe-1: Gerät-1/Kanal-3, Gerät-3/Kanal-5, Gerät-2/Kanal-7. In diesen Gruppen ist auch definiert, ob die einzelnen Kanäle ihren Sensor benutzen oder einen gemeinsamen Sensor, der definiert wird. Bei diesem Sensor-Sharing sorgt das Heizsteuergerät HCU, welches den Sensor angeschlossen hat, dafür, dass diese Daten in der erforderlichen Abtastrate auf dem Datenbus 108 für die anderen Heizsteuergeräte HCU zur Verfügung stehen. Einzelnen Kanälen oder den virtuellen Gruppen können die erforderlichen Sollwertgeber TSP zugeordnet werden, um die Vorgabe der Temperaturwerte für den Bediener zu ermöglichen. Werden einem Temperatursollwertgeber TSP mehrere Kanäle oder Gruppen zugeordnet, können diese im Temperatursollwertgeber TSP separat angewählt werden.

Falls der Temperatursollwertgeber TSP nur einen "up and down"-Taster aufweist, kann das toggeln der Kanäle/Gruppen durch gleichzeitiges betätigen von "up and down" Geschehen.

Fig. 6 zeigt ein Blockschaltbild eines Verbundregelkreises mit einem zentralen Steuergerät gemäß einem Ausführungsbeispiel der vorliegenden Erfindung. Der in diesem Ausführungsbeispiel gezeigte Verbundregelkreis 340 verfügt im Vergleich zu dem in Fig. 3 beschriebenen Ausführungsbeispiel über ein zentrales Steuergerät CCU mit damit verbundenem Datenspeicher PDU aber über keinen Temperatursollwertgeber. Im Vergleich zu dem in Fig. 4 gezeigten Ausführungsbeispiel ist an dem Datenbus 108 ein zentrales Steuergerät CCU angeschlossen. Im Vergleich zu dem in Fig. 5 gezeigten Ausführungsbeispiel ist an dem Datenbus 108 anstelle der Mehrzahl Temperatursollwertgeber TSP bzw. TSP-1, TSP-2, TSP-n ein zentrales Steuergerät CCU angeschlossen.

Eine Geräte-Architektur mit zentralem Controller CCU ohne Temperatursollwertgeber TSP ist in dem in Fig. 6 gezeigten Ausführungsbeispiel dargestellt. Die Heizsteuergeräte HCU werden durch ein globales Bussystem 108 (z. B. CAN-Bus) datentechnisch verbunden. Der zentrale Controller CCU verteilt die Daten im System, sodass dadurch Verbundregelungen möglich sind. Die Sollwerte für dieses Verbundsystem kommen von dem zentralen Steuergerät CCU und/oder sind im Parameterspeicher PDU der Heizsteuergeräte HCU vorgegeben. Die Kanäle in den einzelnen Geräten (HCU) haben im System eine virtuelle Adresse Gerät-Nr./Kanal-Nr. Die Parameter der einzelnen Heizsteuergeräte HCU werden nach Start (Power-On) in diese geladen. Im Parameterspeicher PDU oder im zentralen Controller CCU werden virtuelle Gruppen von Kanälen definiert, z. B. Gruppe-1: Gerät-1/Kanal-3, Gerät-3/Kanal-5, Gerät-2/Kanal-7. In diesen Gruppen ist auch definiert, ob die einzelnen Kanäle ihren Sensor benutzen oder einen gemeinsamen Sensor, der definiert wird. Bei diesem Sensor-Sharing sorgt das Heizsteuergeräte HCU, welches den Sensor angeschlossen hat, dafür, dass diese Daten in der erforderlichen Abtastrate auf dem Datenbus 108 für die anderen Heizsteuergeräte HCU zur Verfügung stehen.

Fig. 7 zeigt einen Ablaufplan eines Verfahrens 750 zum Betreiben eines Heizsteuergeräts für ein Fluggerät gemäß einem Ausführungsbeispiel der vorliegenden Erfindung. Bei dem Fluggerät kann es sich um das in Fig 1 gezeigte Fluggerät 100 handeln. Das Verfahren 750 umfasst einen Schritt 752 des Einlesens eines Sensorsignals, einen Schritt 754 des Bestimmens eines Heizsignals sowie einen Schritt 756 des Bereitstellens des Heizsignals. Im Schritt 752 des Einlesens eines Sensorsignals repräsentiert das Sensorsignal eine Sensorinformation eines Temperatursensors oder eines Eiserkennungssensors, wobei das Sensorsignal über eine Sensorschnittstelle oder über eine Datenbus-Schnittstelle eines der zwei Heizsteuergeräte eingelesen wird. Im Schritt 754 des Bestimmens eines Heizsignals wird das Heizsignal unter Verwendung des in Schritt 752 eingelesenen Sensorsignals bestimmt, wobei das Heizsignal eine Information über einen Strom oder über eine Spannung zum Ansteuern zumindest eines Heizelements repräsentiert. Im Schritt 756 des Bereitstellens wird das Heizsignals an der Schnittstelle für zumindest ein Heizelement zum Bereitstellen eines Heizsignals oder der Datenbus-Schnittstelle bereitgestellt, um zumindest ein Heizelement zu betreiben.

In einem Ausführungsbeispiel wird im Schritt 756 des Bereitstellens das Sensorsignal an der Datenbus-Schnittstelle bereitgestellt.

Im Schritt 752 des Einlesens wird in einem Ausführungsbeispiel zumindest ein Regelparameter eingelesen. In einem Ausführungsbeispiel wird m Schritt 754 des Bestimmens das Heizsignal unter Verwendung des Regelparameters bereitgestellt.

Die beschriebenen und in den Figuren gezeigten Ausführungsbeispiele sind nur beispielhaft gewählt. Unterschiedliche Ausführungsbeispiele können vollständig oder in Bezug auf einzelne Merkmale miteinander kombiniert werden. Auch kann ein Ausführungsbeispiel durch Merkmale eines weiteren Ausführungsbeispiels ergänzt werden.

Ferner können erfindungsgemäße Verfahrensschritte wiederholt sowie in einer anderen als in der beschriebenen Reihenfolge ausgeführt werden.

Umfasst ein Ausführungsbeispiel eine "und/oder"-Verknüpfung zwischen einem ersten Merkmal und einem zweiten Merkmal, so ist dies so zu lesen, dass das Ausführungsbeispiel gemäß einer Ausführungsform sowohl das erste Merkmal als auch das zweite Merkmal und gemäß einer weiteren Ausführungsform entweder nur das erste Merkmal oder nur das zweite Merkmal aufweist.

### Bezugszeichenliste

- HCU: Heating Control Unit / Heizsteuergerät / Heizer-Steuergerät
- TSP: Temperature Setting Panel / Temperatursollwertgeber
- PDU: Parameter Data Unit / Datenspeicher
- CCU: Central Control Unit / zentrales Steuergerät
- TSP-1: erster Temperatursollwertgeber
- TSP-2: zweiter Temperatursollwertgeber
- TSP-n: n-ter Temperatursollwertgeber
- HCU-1: erstes Heizsteuergerät
- HCU-2: zweites Heizsteuergerät
- HCU-n: n-tes Heizsteuergerät
- PDU-1: erster Datenspeicher
- PDU-2: zweiter Datenspeicher
- PDU-n n-ter: Datenspeicher

- 100: Fluggerät
- 102: Verbundregelkreis
- 104: Heizelement
- 106: Sensor
- 108: Datenbus
- 110: Heizsignal

- 220: Datenbus-Schnittstelle
- 222: Sensorschnittstelle
- 224: Schnittstelle für zumindest ein Heizelement
- 226: Sensorsignal
- 228: Kanal
- 230: Einrichtung zum Einlesen eines Sensorsignals
- 232: Einrichtung zum Bestimmen eines Heizsignals
- 234: Einrichtung zum Bereitstellen des Heizsignals

- 340: Verbundregelkreis

- 750: Verfahren
- 752: Schritt des Einlesen
- 754: Schritt des Bestimmen
- 756: Schritt des Bereitstellen

## Patentansprüche

1. Heizsteuergerät (HCU) für ein Fluggerät (100), wobei das Heizsteuergerät (HCU) eine Datenbus-Schnittstelle (220), zumindest eine Sensorschnittstelle (222) sowie eine Schnittstelle (224) für zumindest ein Heizelement (104) zum Bereitstellen eines Heizsignals (110) umfasst, **dadurch gekennzeichnet, dass**
das Heizsteuergerät (HCU) ausgebildet ist, das bereitgestellte Heizsignal (110) unter Verwendung eines über die Datenbus-Schnittstelle (220) und/oder die Sensorschnittstelle (222) empfangenen Sensorsignals (226) zu bestimmen und
das Heizsignal (110) und/oder ein weiteres Heizsignal (110) an der Datenbus-Schnittstelle (220) auszugeben, wobei das weitere Heizsignal (110) unter Verwendung des Sensorsignals (226) bestimmt wird.

2. Heizsteuergerät (HCU) gemäß Anspruch 1, **dadurch gekennzeichnet, dass** die Datenbus-Schnittstelle (220) gleichzeitig als Systembus-Schnittstelle ausgebildet ist und/oder dass die Datenbus-Schnittstelle (220) zur Kommunikation mit einem Echtzeit-Datenbus ausgebildet ist.

3. Heizsteuergerät (HCU) gemäß einem der vorangegangenen Ansprüche, **dadurch gekennzeichnet, dass** über die Datenbus-Schnittstelle (220) ein Heizsignal (110) empfangbar ist, welches an der Schnittstelle (224) für zumindest ein Heizelement (104) ausgebbar ist.

4. Heizsteuergerät (HCU) gemäß einem der vorangegangenen Ansprüche, **dadurch gekennzeichnet, dass** ein über die Sensorschnittstelle (222) empfangenes Sensorsignal (226) an der Datenbus-Schnittstelle (220) bereitgestellt wird.

5. Heizsteuergerät (HCU) gemäß einem der vorangegangenen Ansprüche, **dadurch gekennzeichnet, dass** das Heizsteuergerät (HCU) mit zumindest einem weiteren Heizsteuergerät (HCU) in einen Verbundregelkreis (340), insbesondere unter Verwendung der Datenbus-Schnittstelle (220), zusammenschaltbar ist.

6. Heizsteuergerät (HCU) gemäß einem der vorangegangenen Ansprüche, **gekennzeichnet durch** einen Datenspeicher (PDU), der ausgebildet ist, Sollwertvorgaben und/oder Regelparameter dem Heizsteuergerät (HCU) bereitzustellen.

7. Heizsteuergerät (HCU) gemäß einem der vorangegangenen Ansprüche, **dadurch gekennzeichnet, dass** das Heizsteuergerät (HCU) über die Datenbus-Schnittstelle (220) mit einem Temperatursollwertgeber (TSP) verbindbar ist.

8. Heizsteuergerät (HCU) gemäß einem der vorangegangenen Ansprüche, **dadurch gekennzeichnet, dass** das Heizelement (104) ausgebildet ist, unter Verwendung einer elektrischen Spannung zwischen 100 V und 250 V einen Teilbereich eines Flügels und/oder eines Rotors eines Fluggeräts (100) zu enteisen.

9. Heizsteuergerät (HCU) gemäß einem der vorangegangenen Ansprüche, **dadurch gekennzeichnet, dass** die Sensorschnittstelle (222) ausgebildet ist, Sensordaten und/oder ein Sensorsignal (226) von zumindest einem Widerstandstemperatursensor und/oder einem Eiserkennungssensor zu empfangen.

10. Verbundregelkreis (340) für ein Fluggerät (100) mit zumindest zwei Heizsteuergeräten (HCU) gemäß einem der Ansprüche 1 bis 9, wobei die zumindest zwei Heizsteuergeräte (HCU) mittels eines Datenbusses (108) miteinander verbunden sind.

11. Verbundregelkreis (340) gemäß Anspruch 10, **dadurch gekennzeichnet, dass** ein zentrales Steuergerät (CCU) und/oder zumindest eine Sollwerteingabeeinrichtung (TSP) über den Datenbus (108) mit den zumindest zwei Heizsteuergeräten (HCU) verbunden ist.

12. Verfahren (750) zum Betreiben eines Heizsteuergeräts (HCU) gemäß einem der Ansprüche 1 bis 9 für ein Fluggerät (100), wobei das Verfahren (750) die folgenden Schritte umfasst:
Einlesen (752) eines Sensorsignals (226), wobei das Sensorsignal (226) eine Sensorinformation eines Temperatursensors und/oder eines Eiserkennungssensors repräsentiert, wobei das Sensorsignal (226) mittels einer Sensorschnittstelle (222) und/oder mittels einer Datenbus-Schnittstelle (220) eines der zwei Heizsteuergeräte (HCU) eingelesen wird;
Bestimmen (754) eines Heizsignals (110) unter Verwendung des Sensorsignals (226), wobei das Heizsignal (110) eine Information über einen Strom und/oder über eine Spannung zum Ansteuern zumindest eines Heizelements (104) repräsentiert; und
Bereitstellen (756) des Heizsignals (110) an der Schnittstelle (224) für zumindest ein Heizelement (104) zum Bereitstellen eines Heizsignals (110) und/oder der Datenbus-Schnittstelle (220), um zumindest ein Heizelement (104) zu betreiben.

13. Verfahren (750) gemäß Anspruch 12, **dadurch gekennzeichnet, dass** im Schritt (756) des Bereitstellens das Sensorsignal (226) an der Datenbus-Schnittstelle (220) bereitgestellt wird.

14. Verfahren (750) gemäß einem der Ansprüche 12 bis 13, **dadurch gekennzeichnet, dass** im Schritt (752) des Einlesens zumindest ein Regelparameter eingelesen wird und/oder im Schritt (754) des Bestimmens das Heizsignal (110) unter Verwendung des Regelparameters bereitgestellt wird.

15. Computer-Programmprodukt mit Programmcode zur Durchführung des Verfahrens (750) nach einem der Ansprüche 12 bis 14, wenn das Computer-Programmprodukt auf einer Vorrichtung und/oder einem Heizsteuergerät (HCU) gemäß einem der Ansprüche 1 bis 9 ausgeführt wird.
